# EUROPEAN PATENT SPECIFICATION

(11) **EP 3 617 966 B1**
(45) Date of publication and mention of the grant of the patent: **14.02.2024**
(21) Application number: 19187274.6
(22) Date of filing: 19.07.2019
(51) Int. Cl.: G06Q 10/06

(54) **DATA PROCESSING METHOD, APPARATUS AND READABLE STORAGE MEDIUM FOR EVALUATING RIDE COMFORTABILITY**
DATENVERARBEITUNGSVERFAHREN, VORRICHTUNG UND LESBARES SPEICHERMEDIUM ZUR BEURTEILUNG DES FAHRKOMFORTS
PROCÉDÉ DE TRAITEMENT DE DONNÉES, APPAREIL ET SUPPORT D'ENREGISTREMENT LISIBLE PAR ORDINATEUR PERMETTANT D'ÉVALUER LE CONFORT D'UNE ATTRACTION

(30) Priority: 27.08.2018 CN 201810983689
(43) Date of publication of application: 04.03.2020
(73) Proprietor: Apollo Intelligent Driving Technology (Beijing) Co., Ltd., Haidian District Beijing 100085 (CN)
(72) Inventor: LIU, Rui, BEIJING, HAIDIAN DISTRICT 100085 (CN); ZHANG, Yaling, BEIJING, HAIDIAN DISTRICT 100085 (CN); HU, Yunyan, BEIJING, HAIDIAN DISTRICT 100085 (CN); TAO, Ji, BEIJING, HAIDIAN DISTRICT 100085 (CN); SHEN, Ruixiang, BEIJING, HAIDIAN DISTRICT 100085 (CN)
(74) Representative: Studio Torta S.p.A.

(56) References cited:
- CN-A- 107 862 346
- CN-A- 108 248 608
- JP-A- 2014 046 889
- JP-A- 2018 073 235
- US-A1- 2019 004 518
- US-A1- 2019 202 466

## Description

### TECHNICAL FIELD

The present invention relates to an autonomous driving technology, and in particular to a data processing method, an apparatus and a readable storage medium for evaluating ride comfortability.

### BACKGROUND

With the development of science and technology and the advancement of society, the autonomous driving technology has become a development trend in the field of transportation. In order to provide passengers with a better ride experience, the evaluation of ride comfortability during the autonomous driving is also an essential part.

In the prior art, the data processing for evaluating the ride comfortability is generally realized manually, that is, by collecting the ride experience information recorded by the test passengers, manually conducts statistical analysis of a large number of ride experience information to obtain the ride comfortability of the vehicle.

However, in this way, the data processing procedure of the ride comfortability is cumbersome, the processing efficiency is not high, and the subjectiveness of the evaluation of the ride comfortability is strong, and the evaluated result has low universality.

CN 108 248 608 A is directed towards a method and a device and discloses obtaining the comfortability of a vehicle by establishing the association between a driving action and driving indices of the vehicle.

### SUMMARY

In view of the above-mentioned problems in the existing data processing for evaluating ride comfortability, such as, the cumbersome data processing flow caused by the manual method, the low processing efficiency, the high subjectiveness of the obtained ride comfortability, and the low universality of the evaluated result, the present invention provides a data processing method, an apparatus and a readable storage medium for evaluating ride comfortability. The present invention is defined in the independent claims.

In a first aspect, the present invention provides a data processing method for evaluating ride comfortability, including:
receiving evaluation data input by a user through a data collection port, the evaluation data comprising evaluation information of the user for each driving action of a vehicle on which the user rides;
determining environmental information and vehicle driving parameters when the vehicle executes each driving action;
according to the evaluation information corresponding to each driving action of the vehicle, as well as the environmental information and vehicle driving parameters, training a preset deep learning algorithm model, to obtain an evaluation model for outputting ride comfortability;
wherein the environmental information is determined according to an execution location and an execution time.

In an alternative embodiment, the evaluation information includes one or more of the following information:
feeling of pushing a back, centrifugal feeling, bumpy feeling, forward feeling, frustration feeling and swaying feeling.

In an alternative embodiment, the determining environmental information and vehicle driving parameters when the vehicle executes each driving action, including:
determining an execution location and an execution time when the vehicle executes each driving action;
determining the environmental information and vehicle driving parameters according to the execution location and the execution time.

In an alternative embodiment, the environmental information includes one or more of the following information:
weather information, road condition information and road surface status information;
and/or, the vehicle driving parameters include one or more of the following information:
   vehicle model, driving speed, vehicle acceleration, rate of acceleration change, throttle output, brake output, turning angle, front and rear tilting angle, left and right swinging angle.

In a second aspect, a data processing method for evaluating ride comfortability, wherein, including:
obtaining a driving action to be evaluated, and determining environmental information and/or vehicle driving parameters corresponding to the driving action to be evaluated;
inputting the environmental information and/or vehicle driving parameters corresponding to the driving action to be evaluated into the evaluation model constructed by the method according to any of the preceding methods, and outputting the ride comfortability corresponding to the driving action to be evaluated.

In an alternative embodiment, the evaluation information includes one or more of the following information:
feeling of pushing a back, centrifugal feeling, bumpy feeling, forward feeling, frustration feeling and swaying feeling.

In an alternative embodiment, the environmental information includes one or more of the following information:
weather information, road condition information and road surface status information;
and/or, the vehicle driving parameters include one or more of the following information:
   vehicle model, driving speed, vehicle acceleration, rate of acceleration change, throttle output, brake output, turning angle, front and rear tilting angle, left and right swinging angle.

In a third aspect, the present invention provides a data processing apparatus for evaluating ride comfortability, including:
an evaluation information collection module, configured to receive evaluation data input by a user through a data collection port, the evaluation data including evaluation information of the user for each driving action of a vehicle on which the user rides;
a processing module, configured to determine environmental information and/or vehicle driving parameters when the vehicle executes each driving action;
a training module, configured to, according to the evaluation information corresponding to each driving action of the vehicle, as well as the environmental information and/or vehicle driving parameters, train a preset deep learning algorithm model, to obtain an evaluation model for outputting ride comfortability.

In an alternative embodiment, the evaluation information includes one or more of the following information:
feeling of pushing a back, centrifugal feeling, bumpy feeling, forward feeling, frustration feeling and swaying feeling.

In an alternative embodiment, the processing module is specifically configured to:
determine an execution location and an execution time when the vehicle executes each driving action;
determine the environmental information and/or vehicle driving parameters according to the execution location and the execution time.

In an alternative embodiment, the environmental information includes one or more of the following information:
weather information, road condition information and road surface status information;
and/or, the vehicle driving parameters include one or more of the following information:
   vehicle model, driving speed, vehicle acceleration, rate of acceleration change, throttle output, brake output, turning angle, front and rear tilting angle, left and right swinging angle.

In a fourth aspect, the present invention provides a data processing apparatus for evaluating ride comfortability, including:
a data collection module, configured to obtain a driving action to be evaluated, and determine environmental information and/or vehicle driving parameters corresponding to the driving action to be evaluated;
an identification module, configured to input the environmental information and/or vehicle driving parameters corresponding to the driving action to be evaluated into the evaluation model constructed by the method according to any of the preceding methods, and output the ride comfortability corresponding to the driving action to be evaluated.

In an alternative embodiment, the evaluation information includes one or more of the following information:
feeling of pushing a back, centrifugal feeling, bumpy feeling, forward feeling, frustration feeling and swaying feeling.

In an alternative embodiment, the environmental information includes one or more of the following information:
weather information, road condition information and road surface status information;
and/or, the vehicle driving parameters include one or more of the following information:
   vehicle model, driving speed, vehicle acceleration, rate of acceleration change, throttle output, brake output, turning angle, front and rear tilting angle, left and right swinging angle.

In the fifth aspect, the invention provides a data processing apparatus for evaluating ride comfortability, including: a memory, a processor coupled to the memory, and a computer program stored on the memory and executable on the processor, wherein,
the processor performs any one of the above methods when executing the computer program.

In the sixth aspect, the invention provides a data processing apparatus for evaluating ride comfortability, including: a memory, a processor coupled to the memory, and a computer program stored on the memory and executable on the processor, wherein,
the processor performs any one of the above methods when executing the computer program.

In the seventh aspect, the invention provides a readable storage medium, wherein, including a program, when executed on a terminal, causing the terminal to execute the method as described in any of the preceding aspects.

In the eighth aspect, the invention provides a readable storage medium, wherein, comprising a program, when executed on a terminal, causing the terminal to perform any one of the above methods.

The data processing method, apparatus and readable storage medium for evaluating ride comfortability provided by the present invention, by receiving evaluation data input by a user through a data collection port, the evaluation data including evaluation information of the user for each driving action of a vehicle on which the user rides, determining environmental information and/or vehicle driving parameters when the vehicle executes each driving action, according to the evaluation information corresponding to each driving action of the vehicle, as well as the environmental information and/or vehicle driving parameters, training a preset deep learning algorithm model, to obtain an evaluation model for outputting ride comfortability, the data processing flow for ride comfortability is simplified by establishing an evaluation model that can be used to output ride comfortability, the processing efficiency is improved; at the same time, the evaluation model takes into account the environmental information and/or vehicle driving parameters, making the evaluation of the ride comfortability more objective, the evaluation model can be adapted to the evaluation of vehicles of various types and various test ride environments, with higher universality.

### BRIEF DESCRIPTION OF THE DRAWINGS

Through the above drawings, explicit embodiments of the present disclosure have been shown, which will be described in more detail later. The drawings and the description are not intended to limit the scope of the present disclosure in any way, but the concepts of the present disclosure will be described to those skilled in the art by reference to the specific embodiments.
FIG. 1 is a schematic diagram of a network architecture based on the present invention;
FIG. 2 is a schematic flowchart of a data processing method for evaluating ride comfortability according to Embodiment 1 of the present invention;
FIG. 3 is a schematic flowchart of a data processing method for evaluating ride comfortability according to Embodiment 2 of the present invention;
FIG. 4 is a schematic structural diagram of a data processing apparatus for evaluating ride comfortability according to Embodiment 3 of the present invention;
FIG. 5 is a hardware schematic diagram of a data processing apparatus for evaluating ride comfortability according to the present invention;
FIG. 6 is an another hardware schematic diagram of a data processing apparatus for evaluating ride comfortability provided by the present invention.

The drawings herein are incorporated in and constitute a part of the specification, show embodiments conforming to the present disclosure and are used with the specification to explain the principles of the present disclosure.

### DETAILED DESCRIPTION OF THE EMBODIMENTS

In order to make the objectives, technical solutions, and advantages of embodiments of the present invention more clearly, the technical solutions in the embodiments of the present invention are described clearly and completely in conjunction with the accompanying drawings in the embodiments of the present invention.

With the development of science and technology and the advancement of society, the autonomous driving technology has become a development trend in the field of transportation. In order to provide passengers with a better ride experience, the evaluation of ride comfortability during autonomous driving is also an essential part.

In the prior art, the data processing for evaluating the ride comfortability is generally realized manually, that is, by collecting the ride experience information recorded by the test passengers, manually conducts statistical analysis of a large number of ride experience information to obtain the ride comfortability of the vehicle.

However, in this way, the data processing procedure of the ride comfortability is cumbersome, the processing efficiency is not high, and the subjectiveness of the evaluation of the ride comfortability is strong, and the evaluated result has low universality.

In response to the above mentioned technical problems, the present invention provides a data processing method, an apparatus and a readable storage medium for evaluating ride comfortability. It should be noted that the data processing method, apparatus and readable storage medium for evaluating ride comfortability provided by the present application can be applied in application scenarios that are widely required to evaluate the ride comfortability, including but not limited to: vehicle performance evaluation of new cars, performance evaluation of autonomous driving programs, etc..

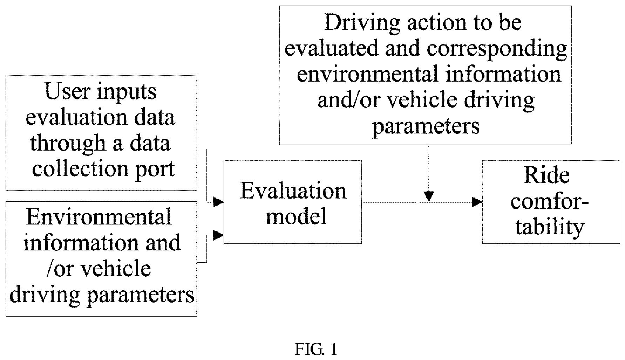

FIG. 1 is a schematic diagram of a network architecture based on the present invention, as shown in FIG. 1, unlike the prior art, in the present application, the user can log in a data collection port by using a terminal to input evaluation data to the data processing apparatus for evaluating the ride comfortability, so that he/she can obtain environmental information and/or vehicle driving parameters corresponding to the evaluation data from the network server side, and obtain an evaluation model for outputting the ride comfortability.

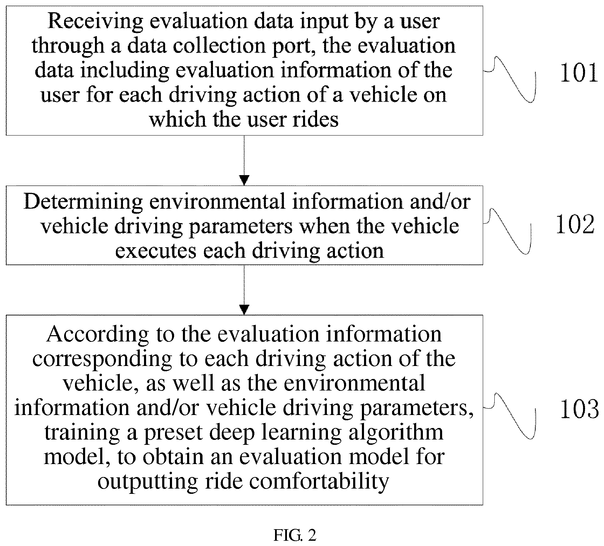

FIG. 2 is a schematic flowchart of a data processing method for evaluating ride comfortability according to Embodiment 1 of the present invention.

As shown in FIG. 2, the data processing method includes:
Step 101, receiving evaluation data input by a user through a data collection port, the evaluation data including evaluation information of the user for each driving action of a vehicle on which the user rides.
Step 102, determining environmental information and/or vehicle driving parameters when the vehicle executes each driving action.
Step 103, according to the evaluation information corresponding to each driving action of the vehicle, as well as the environmental information and/or vehicle driving parameters, training a preset deep learning algorithm model, to obtain an evaluation model for outputting ride comfortability.

It should be noted, the execution body of the data processing method for evaluating ride comfortability provided by the present invention may specifically be a data processing apparatus for evaluating ride comfortability, the data processing apparatus can execute an data interaction with the data collection port that the user logs in, and can also perform communication and data interaction with a network server.

Specifically, the present invention provides a data processing method for evaluating ride comfortability, first, a data processing apparatus for evaluating ride comfortability receives evaluation data input by a user through a data collection port, the evaluation data including evaluation information of the user for each driving action of a vehicle on which the user rides. Further, when testing riding the vehicle, the user can log in to the data collection application through the terminal, and upload the evaluation data input during the test ride through the data collection port provided by the data collection application. In general, the evaluation is performed based on the test ride tasks, and the test ride tasks include various driving actions executed by the vehicle during the automatic driving process, such as starting, braking, steering, acceleration, parking, and the like. The evaluation data correspond to the test ride tasks, which may include evaluation information evaluated by the user on each driving action executed by the vehicle. The evaluation information may be in the form of a scoring measurement, or other measurement forms, and the application does not limit this.

Optional, in other embodiments, the evaluation information includes one or more of the following information: feeling of pushing a back, centrifugal feeling, bumpy feeling, forward feeling, frustration feeling and swaying feeling. Specifically, the feeling of pushing a back means a feeling that the back of a chair is pressed against the back to push him/her forward; the centrifugal feeling means that people have a feeling of being pressed or pulled out in one direction in the lateral direction; the bumpy feeling means that people have a feeling of leaving the seat in the air with a certain weight loss; the forward feeling means that means that people have a feeling of leaning forward or with a certain degree of nodding; the frustration feeling means that people have a feeling that the driving is not smooth or carsickness; the swaying feeling means that people feel that the driving strategy of the vehicle is unsafe and unreliable, and the behavior trajectory is erratic. By setting at least one of the above dimensions of evaluation information, the evaluation model can output more comprehensive evaluation information.

Subsequently, the data processing apparatus for evaluating ride comfortability determines environmental information and/or vehicle driving parameters when the vehicle executes each driving action. Specifically, in order to evaluate the ride comfortability, it is necessary to establish a relationship between the driving action and the evaluation information. In order to make the evaluation information that the evaluation model can output more objective and more universal, in this application, the environmental information and/or vehicle driving parameters of the vehicle when performing the driving action also need to be determined.

Optional, the environmental information includes one or more of the following information: weather information, road condition information and road surface status information. Wherein, the weather information refers to the weather when the driving action is performed, such as rainy days, snowy days, sunny days, windy, etc.; the road condition information refers to the traffic conditions on the road when the driving action is executed, such as smooth, slight traffic jam, severe congestion, etc.; the road surface status information refers to the type of road surface when the driving action is executed, such as asphalt road, grass, dirt road, etc..

The vehicle driving parameters include one or more of the following information: vehicle model, driving speed, vehicle acceleration, rate of acceleration change, throttle output, brake output, turning angle, front and rear tilting angle, left and right swinging angle. Wherein, the vehicle model refers to the brand, model, type of vehicle, etc. of the vehicle that executes the driving action; the above driving speed, turning angle, front and rear tilting angle, and left and right swinging angle are vehicle driving parameters that can all be measured by a vehicle sensor.

At last, according to the evaluation information corresponding to each driving action of the vehicle, as well as environmental information and/or vehicle driving parameters, a preset deep learning algorithm model is trained, to obtain an evaluation model for outputting ride comfortability. Specifically, using the collected evaluation information, and environmental information and/or vehicle driving parameters, the deep learning algorithm model is trained in combination with driving action, so that the corresponding ride comfortability is output according to the input driving action, as well as the environmental information and/or the vehicle driving parameters.

The data processing method for evaluating ride comfortability provided by Embodiment 1 of the present invention, by receiving evaluation data input by a user through a data collection port, the evaluation data including evaluation information of the user for each driving action of the vehicle on which the user rides, the environmental information and/or vehicle driving parameters when the vehicle executes each driving action is determined, according to the evaluation information corresponding to each driving action of the vehicle, as well as the environmental information and/or vehicle driving parameters, a preset deep learning algorithm model is trained, to obtain an evaluation model for outputting ride comfortability. By establishing the evaluation model that can be used to output ride comfortability, the data processing flow for ride comfortability is simplified, and the processing efficiency is improved; at the same time, the evaluation model takes into account environmental information and/or vehicle driving parameters, making the evaluation of the ride comfortability more objective, and the evaluation model can be adapted to the evaluation of vehicles of various types and various test ride environments, with higher universality.

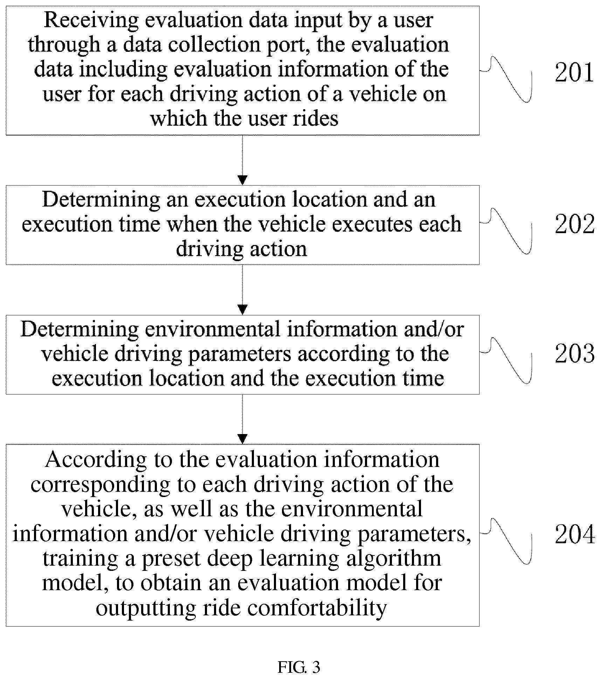

FIG. 3 is a schematic flowchart of a data processing method for evaluating ride comfortability according to Embodiment 2 of the present invention.

As shown in FIG. 3, the data processing method includes:
Step 201, receiving evaluation data input by a user through a data collection port, the evaluation data including evaluation information of the user for each driving action of a vehicle on which the user rides.
Step202, determining an execution location and an execution time when the vehicle executes each driving action.
Step203, determining environmental information and/or vehicle driving parameters according to the execution location and the execution time.
Step204, according to the evaluation information corresponding to each driving action of the vehicle, as well as the environmental information and/or vehicle driving parameters, training a preset deep learning algorithm model, to obtain an evaluation model for outputting ride comfortability.

It should be noted, the execution body of the data processing method for evaluating ride comfortability provided by the present invention may specifically be a data processing apparatus for evaluating ride comfortability, the data processing apparatus can execute an data interaction with the data collection port that the user logs in, and can also perform communication and data interaction with the network server.

Specifically, similar to Embodiment 1, Embodiment 2 provides a data processing method for evaluating ride comfortability, first, a data processing apparatus for evaluating ride comfortability receives evaluation data input by a user through a data collection port, the evaluation data including evaluation information of the user for each driving action of a vehicle on which the user rides. Further, when testing riding the vehicle, the user can log in to the data collection application through the terminal, and upload the evaluation data input during the test ride through the data collection port provided by the data collection application. In general, the evaluation is performed based on the test ride tasks, and the test ride tasks include various driving actions executed by the vehicle during the automatic driving process, such as starting, braking, steering, acceleration, parking, and the like. The evaluation data correspond to the test ride tasks, which may include evaluation information evaluated by the user on each driving action executed by the vehicle. The evaluation information may be in the form of a scoring measurement, or other measurement forms, and the application does not limit this.

Optional, in other embodiments, the evaluation information includes one or more of the following information: feeling of pushing a back, centrifugal feeling, bumpy feeling, forward feeling, frustration feeling and swaying feeling. Specifically, the feeling of pushing a back means a feeling that the back of a chair is pressed against the back to push him/her forward; the centrifugal feeling means that people have a feeling of being pressed or pulled out in one direction in the lateral direction; the bumpy feeling means that people have a feeling of leaving the seat in the air with a certain weight loss; the forward feeling means that means that people have a feeling of leaning forward or with a certain degree of nodding; the frustration feeling means that people have a feeling that the driving is not smooth or carsickness; the swaying feeling means that people feel that the driving strategy of the vehicle is unsafe and unreliable, and the behavior trajectory is erratic. By setting at least one of the above dimensions of evaluation information, the evaluation model can output more comprehensive evaluation information.

Subsequently, different from the Embodiment 1, the data processing apparatus for evaluating ride comfortability determining environmental information and/or vehicle driving parameters when the vehicle executes each driving action, specifically, includes: determining an execution location and an execution time when the vehicle executes each driving action; and determining the environmental information and/or vehicle driving parameters according to the execution location and the execution time. Wherein, when the vehicle executes each driving action, the data processing apparatus also records the execution location and execution time when the driving action is executed, while receiving the evaluation information, the environmental parameters at each execution time of each execution location can then be obtained through a web server, and the vehicle driving parameters of the vehicle at each execution time of each execution location can also be obtained.

Optional, the environmental information includes one or more of the following information: weather information, road condition information and road surface status information. Wherein, the weather information refers to the weather when the driving action is executed, such as rainy days, snowy days, sunny days, windy, etc.; the road condition information refers to the traffic conditions on the road when the driving action is executed, such as smooth, slight traffic jam, severe congestion, etc.; the road surface status information refers to the type of road surface when the driving action is executed, such as asphalt road, grass, dirt road, etc.. The vehicle driving parameters include one or more of the following information: vehicle model, driving speed, turning angle, front and rear tilting angle, left and right swinging angle, vehicle acceleration, rate of acceleration change, throttle output, brake output. Wherein, the vehicle model refers to the brand, model, type of vehicle, etc. of the vehicle that executes the driving action; the above driving speed, turning angle, front and rear tilting angle, left and right swinging angle, vehicle acceleration, rate of acceleration change, throttle output, and brake output, etc. are vehicle driving parameters that can all be measured by a vehicle sensor.

At last, according to the evaluation information corresponding to each driving action of the vehicle, as well as environmental information and/or vehicle driving parameters, a preset deep learning algorithm model is trained, to obtain an evaluation model for outputting ride comfortability. Specifically, using the collected evaluation information, and the environmental information and/or vehicle driving parameters, the deep learning algorithm model is trained in combination with driving action, so that it can output the corresponding ride comfortability according to the input driving action, as well as the environmental information and/or the vehicle driving parameters.

The data processing method for evaluating ride comfortability provided by Embodiment 2 of the present invention, by receiving evaluation data input by a user through a data collection port, the evaluation data including evaluation information of the user for each driving action of the vehicle on which the user rides, the environmental information and/or vehicle driving parameters when the vehicle executes each driving action is determined, according to the evaluation information corresponding to each driving action of the vehicle, as well as the environmental information and/or vehicle driving parameters, a preset deep learning algorithm model is trained, to obtain an evaluation model for outputting ride comfortability. By establishing the evaluation model that can be used to output ride comfortability, the data processing flow for ride comfortability is simplified, and the processing efficiency is improved; at the same time, the evaluation model takes into account environmental information and/or vehicle driving parameters, making the evaluation of the ride comfortability more objective, and the evaluation model can be adapted to the evaluation of vehicles of various types and various test ride environments, with higher universality.

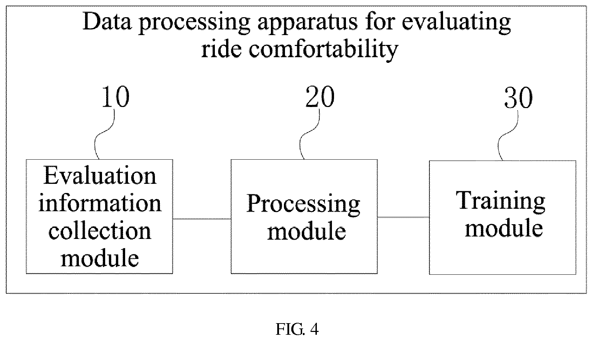

FIG. 4 is a schematic structural diagram of a data processing apparatus for evaluating ride comfortability according to Embodiment 3 of the present invention, as shown in FIG. 4, the data processing apparatus for evaluating ride comfortability includes:
an evaluation information collection module 10 configured to receive evaluation data input by a user through a data collection port, the evaluation data including evaluation information of the user for each driving action of a vehicle on which the user rides;
a processing module 20 configured to determine environmental information and/or vehicle driving parameters when the vehicle executes each driving action;
a training module 30, configured to, according to the evaluation information corresponding to each driving action of the vehicle, as well as the environmental information and/or vehicle driving parameters, train a preset deep learning algorithm model, to obtain an evaluation model for outputting ride comfortability.

Optional, the evaluation information includes one or more of the following information:
feeling of pushing a back, centrifugal feeling, bumpy feeling, forward feeling, frustration feeling and swaying feeling.

Optional, the processing module 20 is configured to:
determine an execution location and an execution time when the vehicle executes each driving action;
determine the environmental information and/or vehicle driving parameters according to the execution location and the execution time.

Optional, the environmental information includes one or more of the following information:
weather information, road condition information and road surface status information;
and/or, the vehicle driving parameters include one or more of the following information:
   vehicle model, driving speed, vehicle acceleration, rate of acceleration change, throttle output, brake output, turning angle, front and rear tilting angle, left and right swinging angle.

A person skilled in the art can clearly understand that for the convenience and brevity of the description, the specific working process of the system described above and the corresponding beneficial effects can refer to the corresponding processes in the foregoing method embodiments, and details are not described herein again.

The data processing apparatus for evaluating ride comfortability provided by the present invention, by receiving evaluation data input by a user through a data collection port, the evaluation data including evaluation information of the user for each driving action of the vehicle on which the user rides, the environmental information and/or vehicle driving parameters when the vehicle executes each driving action is determined, according to the evaluation information corresponding to each driving action of the vehicle, as well as the environmental information and/or vehicle driving parameters, a preset deep learning algorithm model is trained, to obtain an evaluation model for outputting ride comfortability. By establishing the evaluation model that can be used to output ride comfortability, the data processing flow for ride comfortability is simplified, and the processing efficiency is improved; at the same time, the evaluation model takes into account environmental information and/or vehicle driving parameters, making the evaluation of the ride comfortability more objective, and the evaluation model can be adapted to the evaluation of vehicles of various types and various test ride environments, with higher universality.

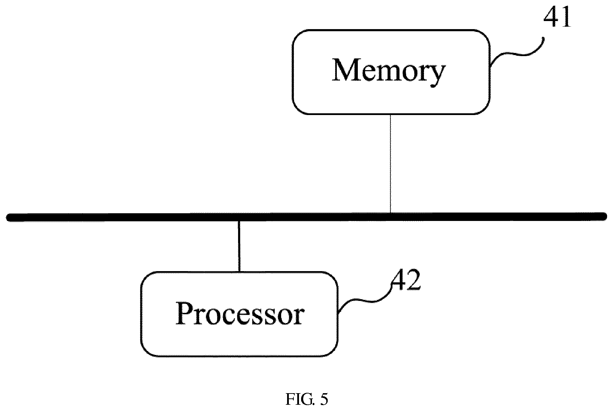

FIG. 5 is a hardware schematic diagram of a data processing apparatus for evaluating ride comfortability provided by the present invention. As shown in FIG. 5, the terminal includes a processor 42 and a computer program stored on a memory 41 and operable on the processor 42, the processor 42 performs the method of any of the above embodiments when executing the computer program.

Embodiment 5 of the present invention also provides a data processing method for evaluating ride comfortability, specifically, it may include: obtaining a driving action to be evaluated, and determining environmental information and/or vehicle driving parameters corresponding to the driving action to be evaluated; inputting the environmental information and/or vehicle driving parameters corresponding to the driving action to be evaluated into an evaluation model constructed by the method described in Embodiment 1 or Embodiment 2, and outputting the ride comfortability corresponding to the driving action to be evaluated.

In an alternative embodiment, the evaluation information includes one or more of the following information: feeling of pushing a back, centrifugal feeling, bumpy feeling, forward feeling, frustration feeling and swaying feeling.

In an alternative embodiment, the environmental information includes one or more of the following information: weather information, road condition information and road surface status information; and/or, the vehicle driving parameters include one or more of the following information: vehicle model, driving speed, vehicle acceleration, rate of acceleration change, throttle output, brake output, turning angle, front and rear tilting angle, left and right swinging angle.

A person skilled in the art can clearly understand that for the convenience and brevity of the description, the specific working process of the system described above and the corresponding beneficial effects can refer to the corresponding processes in the foregoing method embodiments, and details are not described herein again.

Embodiment 6 of the present invention also provides a data processing apparatus for evaluating ride comfortability, specifically, it may include:
a data collection module, configured to obtain a driving action to be evaluated, and determine environmental information and/or vehicle driving parameters corresponding to the driving action to be evaluated;
an identification module, configured to input the environmental information and/or vehicle driving parameters corresponding to the driving action to be evaluated into the evaluation model constructed by the method according to any of the preceding methods, and outputting the ride comfortability corresponding to the driving action to be evaluated.

In an alternative embodiment, the evaluation information includes one or more of the following information: feeling of pushing a back, centrifugal feeling, bumpy feeling, forward feeling, frustration feeling and swaying feeling.

In an alternative embodiment, the environmental information includes one or more of the following information: weather information, road condition information and road surface status information; and/or, the vehicle driving parameters include one or more of the following information: vehicle model, driving speed, vehicle acceleration, rate of acceleration change, throttle output, brake output, turning angle, front and rear tilting angle, left and right swinging angle.

A person skilled in the art can clearly understand that for the convenience and brevity of the description, the specific working process of the system described above and the corresponding beneficial effects can refer to the corresponding processes in the foregoing method embodiments, and details are not described herein again.

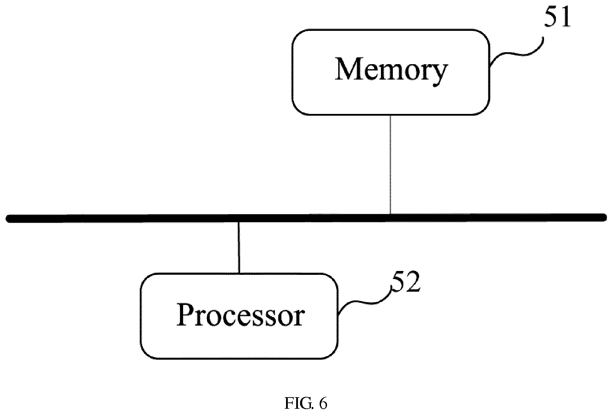

FIG. 6 is an another hardware schematic diagram of a data processing apparatus for evaluating ride comfortability according to the present invention. As shown in FIG. 6, the terminal includes a processor 52 and a computer program stored on a memory 51 and operable on the processor 52, the processor 52 performs the method of the above fifth embodiment when executing the computer program.

The present invention also provides a readable storage medium, comprising a program, when executed on a terminal, causing the terminal to perform the method of any of the above embodiments.

One of ordinary skill in the art can understand that all or part of the steps of implementing the foregoing method embodiments can be completed by hardware related to the program instructions. The aforementioned program can be stored in a computer readable storage medium. When the program is executed, the steps including the above method embodiments is executed; the foregoing storage medium includes: various media that can store program codes, such as a ROM, a RAM, a magnetic disk, or an optical disk etc..

## Claims

1. A data processing method for evaluating ride comfortability during an autonomous driving, implemented by a data processing apparatus, comprising:
receiving evaluation data input by a user through a data collection port, the evaluation data comprising evaluation information of the user for each driving action of a vehicle on which the user rides;
determining environmental information and vehicle driving parameters when the vehicle executes each driving action, wherein the environmental information comprises weather information, road condition information and road surface status information; and
according to the evaluation information corresponding to each driving action of the vehicle, as well as the environmental information and vehicle driving parameters, training a preset deep learning algorithm model, to obtain an evaluation model for outputting ride comfortability;
wherein, the determining environmental information and vehicle driving parameters when the vehicle executes each driving action, comprises:
determining an execution location and an execution time when the vehicle executes each driving action;
determining the environmental information and vehicle driving parameters according to the execution location and the execution time.

2. The data processing method according to claim 1, wherein, the evaluation information comprises one or more of the following information:
feeling of pushing a back, centrifugal feeling, bumpy feeling, forward feeling, frustration feeling and swaying feeling.

3. The data processing method according to claim 1 or 2, wherein, the vehicle driving parameters comprise one or more of the following information:
vehicle model, driving speed, vehicle acceleration, rate of acceleration change, throttle output, brake output, turning angle, front and rear tilting angle, left and right swinging angle.

4. A data processing method for evaluating ride comfortability during an autonomous driving, implemented by a data processing apparatus, comprising:
obtaining a driving action to be evaluated, and determining environmental information and vehicle driving parameters corresponding to the driving action to be evaluated;
inputting the environmental information and vehicle driving parameters corresponding to the driving action to be evaluated into the evaluation model constructed by the method of any one of claims 1-3, and outputting the ride comfortability corresponding to the driving action to be evaluated.

5. A data processing apparatus for evaluating ride comfortability during an autonomous driving, comprising:
an evaluation information collection module, configured to receive evaluation data input by a user through a data collection port, the evaluation data comprising evaluation information of the user for each driving action of a vehicle on which the user rides;
a processing module, configured to determine environmental information and vehicle driving parameters when the vehicle executes each driving action, wherein the environmental information comprises weather information, road condition information and road surface status information;
a training module, configured to, according to the evaluation information corresponding to each driving action of the vehicle, as well as the environmental information and vehicle driving parameters, train a preset deep learning algorithm model, to obtain an evaluation model for outputting ride comfortability;
wherein, the processing module is configured to:
determine an execution location and an execution time when the vehicle executes each driving action;
determine the environmental information and vehicle driving parameters according to the execution location and the execution time.

6. The data processing apparatus according to claim 5, wherein, the evaluation information comprises one or more of the following information:
feeling of pushing a back, centrifugal feeling, bumpy feeling, forward feeling, frustration feeling and swaying feeling.

7. The data processing apparatus according to claim 5 or 6, wherein, the vehicle driving parameters comprise one or more of the following information:
vehicle model, driving speed, vehicle acceleration, rate of acceleration change, throttle output, brake output, turning angle, front and rear tilting angle, left and right swinging angle.

8. A data processing apparatus for evaluating ride comfortability during an autonomous driving, comprising:
a data collection module, configured to obtain a driving action to be evaluated, and determine environmental information and vehicle driving parameters corresponding to the driving action to be evaluated;
an identification module, configured to input the environmental information and vehicle driving parameters corresponding to the driving action to be evaluated into the evaluation model constructed by the method of any one of claims 1-3, and output the ride comfortability corresponding to the driving action to be evaluated.

9. The data processing apparatus according to claim 8, wherein,
the evaluation information comprises one or more of the following information:
feeling of pushing a back, centrifugal feeling, bumpy feeling, forward feeling, frustration feeling and swaying feeling.

10. The data processing apparatus according to claim 8, wherein, the vehicle driving parameters comprise one or more of the following information:
vehicle model, driving speed, vehicle acceleration, rate of acceleration change, throttle output, brake output, turning angle, front and rear tilting angle, left and right swinging angle.

11. A data processing apparatus for evaluating ride comfortability during an autonomous driving, comprising: a memory, a processor coupled to the memory, and a computer program stored on the memory and executable on the processor, wherein,
the processor performs the method of any one of claims 1-3 when executing the computer program.

12. A data processing apparatus for evaluating ride comfortability during an autonomous driving, comprising: a memory, a processor coupled to the memory, and a computer program stored on the memory and executable on the processor, wherein,
the processor performs the method of claim 4 when executing the computer program.

13. A readable storage medium, comprising a program, when executed on a terminal, causing the terminal to perform the method of any one of claims 1-3.

## Patentansprüche

1. Datenverarbeitungsverfahren zum Bewerten eines Fahrkomforts während eines autonomen Fahrens, das durch eine Datenverarbeitungseinrichtung implementiert wird, umfassend:
Empfangen von Bewertungsdaten, die von einem Benutzer über einen Datenerfassungsanschluss eingegeben werden, wobei die Bewertungsdaten Bewertungsinformationen des Benutzers für jede Fahraktion eines Fahrzeugs umfassen, in welchen der Benutzer fährt;
Bestimmen von Umgebungsinformationen und Fahrzeugfahrparametern, wenn das Fahrzeug jede Fahraktion ausführt, wobei die Umgebungsinformationen Wetterinformationen, Informationen zum Straßenzustand und Informationen zum Zustand der Straßenoberfläche umfassen; und
Trainieren eines voreingestellten Deep-Learning-Algorithmusmodells gemäß den Bewertungsinformationen, die jeder Fahraktion des Fahrzeugs entsprechen, sowie den Umgebungsinformationen und Fahrzeugfahrparametern, um ein Bewertungsmodell zur Ausgabe des Fahrkomforts zu erhalten;
wobei das Bestimmen von Umgebungsinformationen und Fahrzeugfahrparametern, wenn das Fahrzeug jede Fahraktion ausführt, umfasst:
Bestimmen eines Ausführungsorts und einer Ausführungszeit, wenn das Fahrzeug jede Fahraktion ausführt;
Bestimmen der Umgebungsinformationen und Fahrzeugfahrparameter gemäß dem Ausführungsort und der Ausführungszeit.

2. Datenverarbeitungsverfahren nach Anspruch 1, wobei die Bewertungsinformationen eine oder mehrere der folgenden Informationen umfassen:
Gefühl eines Zurückdrängens, Zentrifugalgefühl, holpriges Gefühl, Vorwärtsgefühl, Frustrationsgefühl und schwankendes Gefühl.

3. Datenverarbeitungsverfahren nach Anspruch 1 oder 2, wobei die Fahrzeugfahrparameter eine oder mehrere der folgenden Informationen umfassen:
Fahrzeugmodell, Fahrgeschwindigkeit, Fahrzeugbeschleunigung, Geschwindigkeit der Beschleunigungsänderung, Drosselklappenleistung, Bremsleistung, Wendewinkel, vorderer und hinterer Neigungswinkel, linker und rechter Schwenkwinkel.

4. Datenverarbeitungsverfahren zum Bewerten eines Fahrkomforts während eines autonomen Fahrens, das durch eine Datenverarbeitungseinrichtung implementiert wird, umfassend:
Erhalten einer zu bewertenden Fahraktion und Bestimmen von Umgebungsinformationen und Fahrzeugfahrparametern, die der zu bewertenden Fahraktion entsprechen;
Eingeben der Umgebungsinformationen und Fahrzeugfahrparameter, die der zu bewertenden Fahraktion entsprechen, in das Bewertungsmodell, das durch das Verfahren nach einem der Ansprüche 1-3 erstellt wurde, und Ausgeben des Fahrkomforts, der der zu bewertenden Fahraktion entspricht.

5. Datenverarbeitungseinrichtung zum Bewerten eines Fahrkomforts während eines autonomen Fahrens, umfassend:
ein Bewertungsinformations-Sammelmodul, das dazu konfiguriert ist, von einem Benutzer eingegebene Bewertungsdaten über einen Datenerfassungsanschluss zu empfangen, wobei die Bewertungsdaten Bewertungsinformationen des Benutzers für jede Fahraktion eines Fahrzeugs umfassen, in welchem der Benutzer fährt;
ein Verarbeitungsmodul, das dazu konfiguriert ist, Umgebungsinformationen und Fahrzeugfahrparameter zu bestimmen, wenn das Fahrzeug jede Fahraktion ausführt, wobei die Umgebungsinformationen Wetterinformationen, Informationen zum Straßenzustand und Informationen zum Zustand der Straßenoberfläche umfassen;
ein Trainingsmodul, das dazu konfiguriert ist, gemäß den Bewertungsinformationen, die jeder Fahraktion des Fahrzeugs entsprechen, sowie den Umgebungsinformationen und Fahrzeugfahrparametern ein voreingestelltes Deep-Learning-Algorithmusmodell zu trainieren, um ein Bewertungsmodell zum Ausgeben des Fahrkomforts zu erhalten;
wobei das Verarbeitungsmodul dazu konfiguriert ist:
einen Ausführungsort und eine Ausführungszeit zu bestimmen, wenn das Fahrzeug jede Fahraktion ausführt;
Umgebungsinformationen und Fahrzeugfahrparameter gemäß dem Ausführungsort und der Ausführungszeit zu bestimmen.

6. Datenverarbeitungseinrichtung nach Anspruch 5, wobei die Bewertungsinformationen eine oder mehrere der folgenden Informationen umfassen:
Gefühl eines Zurückdrängens, Zentrifugalgefühl, holpriges Gefühl, Vorwärtsgefühl, Frustrationsgefühl und schwankendes Gefühl.

7. Datenverarbeitungseinrichtung nach Anspruch 5 oder 6, wobei die Fahrzeugfahrparameter eine oder mehrere der folgenden Informationen umfassen:
Fahrzeugmodell, Fahrgeschwindigkeit, Fahrzeugbeschleunigung, Geschwindigkeit der Beschleunigungsänderung, Drosselklappenleistung, Bremsleistung, Wendewinkel, vorderer und hinterer Neigungswinkel, linker und rechter Schwenkwinkel.

8. Datenverarbeitungseinrichtung zum Bewerten eines Fahrkomforts während eines autonomen Fahrens, umfassend:
ein Datenerfassungsmodul, das dazu konfiguriert ist, eine zu bewertende Fahraktion zu erhalten und Umgebungsinformationen und Fahrzeugfahrparameter zu bestimmen, die der zu bewertenden Fahraktion entsprechen;
ein Identifikationsmodul, das dazu konfiguriert ist, die Umgebungsinformationen und Fahrzeugfahrparameter, die der zu bewertenden Fahraktion entsprechen, in das nach dem Verfahren nach einem der Ansprüche 1-3 erstellte Bewertungsmodell einzugeben und den Fahrkomfort, der der zu bewertenden Fahraktion entspricht, auszugeben.

9. Datenverarbeitungseinrichtung nach Anspruch 8, wobei
die Bewertungsinformationen eine oder mehrere der folgenden Informationen umfassen:
Gefühl eines Zurückdrängens, Zentrifugalgefühl, holpriges Gefühl, Vorwärtsgefühl, Frustrationsgefühl und schwankendes Gefühl.

10. Datenverarbeitungseinrichtung nach Anspruch 8, wobei die Fahrzeugfahrparameter eine oder mehrere der folgenden Informationen umfassen:
Fahrzeugmodell, Fahrgeschwindigkeit, Fahrzeugbeschleunigung, Geschwindigkeit der Beschleunigungsänderung, Drosselklappenleistung, Bremsleistung, Wendewinkel, vorderer und hinterer Neigungswinkel, linker und rechter Schwenkwinkel.

11. Datenverarbeitungseinrichtung zum Bewerten eines Fahrkomforts während eines autonomen Fahrens, umfassend: einen Speicher, einen mit dem Speicher gekoppelten Prozessor und ein Computerprogramm, das im Speicher gespeichert und auf dem Prozessor ausführbar ist, wobei
der Prozessor das Verfahren nach einem der Ansprüche 1-3 durchführt, wenn er das Computerprogramm ausführt.

12. Datenverarbeitungseinrichtung zum Bewerten eines Fahrkomforts während eines autonomen Fahrens, umfassend: einen Speicher, einen mit dem Speicher gekoppelten Prozessor und ein Computerprogramm, das im Speicher gespeichert und auf dem Prozessor ausführbar ist, wobei
der Prozessor das Verfahren nach Anspruch 4 durchführt, wenn er das Computerprogramm ausführt.

13. Lesbares Speichermedium, das ein Programm umfasst, das bei Ausführung auf einem Endgerät das Endgerät dazu veranlasst, das Verfahren nach einem der Ansprüche 1-3 durchzuführen.

## Revendications

1. Procédé de traitement de données pour évaluer le confort de conduite pendant une conduite autonome, mis en oeuvre par un appareil de traitement de données, comprenant :
la réception de données d'évaluation saisies par un utilisateur par l'intermédiaire d'un port de collecte de données, les données d'évaluation comprenant des informations d'évaluation de l'utilisateur pour chaque action de conduite d'un véhicule avec lequel l'utilisateur conduit ;
la détermination d'informations environnementales et de paramètres de conduite de véhicule lorsque le véhicule exécute chaque action de conduite, dans lequel les informations environnementales comprennent des informations météorologiques, des informations sur l'état des routes et des informations sur l'état de surface des routes ; et
en fonction des informations d'évaluation correspondant à chaque action de conduite du véhicule, ainsi que des informations environnementales et des paramètres de conduite de véhicule, le formation d'un modèle d'algorithme d'apprentissage profond prédéfini, pour obtenir un modèle d'évaluation permettant de délivrer en sortie le confort de conduite ;
dans lequel la détermination d'informations environnementales et de paramètres de conduite de véhicule lorsque le véhicule exécute chaque action de conduite comprend :
la détermination d'un emplacement d'exécution et d'un moment d'exécution lorsque le véhicule exécute chaque action de conduite ;
la détermination des informations environnementales et des paramètres de conduite de véhicule en fonction de l'emplacement d'exécution et du moment d'exécution.

2. Procédé de traitement de données selon la revendication 1, dans lequel les informations d'évaluation comprennent une ou plusieurs des informations suivantes :
la sensation d'être poussé en arrière, la sensation centrifuge, la sensation de cahotement, la sensation d'avancée, la sensation de frustration et la sensation de balancement.

3. Procédé de traitement de données selon la revendication 1 ou 2, dans lequel les paramètres de conduite de véhicule comprennent une ou plusieurs des informations suivantes :
le modèle de véhicule, la vitesse de conduite, l'accélération de véhicule, le rythme de changement d'accélération, la sortie de papillon des gaz, la sortie de freinage, l'angle de braquage, l'angle d'inclinaison avant et arrière, l'angle d'oscillation gauche et droite.

4. Procédé de traitement de données pour évaluer le confort de conduite pendant une conduite autonome, mis en oeuvre par un appareil de traitement de données, comprenant :
l'obtention d'une action de conduite à évaluer, et la détermination d'informations environnementales et de paramètres de conduite de véhicule correspondant à l'action de conduite à évaluer ;
la saisie des informations environnementales et des paramètres de conduite de véhicule correspondant à l'action de conduite à évaluer dans le modèle d'évaluation construit par le procédé selon l'une quelconque des revendications 1-3, et la délivrance en sortie du confort de conduite correspondant à l'action de conduite à évaluer.

5. Appareil de traitement de données pour évaluer le confort de conduite pendant une conduite autonome, comprenant :
un module de collecte d'informations d'évaluation, configuré pour recevoir des données d'évaluation saisies par un utilisateur par l'intermédiaire d'un port de collecte de données, les données d'évaluation comprenant des informations d'évaluation de l'utilisateur pour chaque action de conduite d'un véhicule avec lequel l'utilisateur conduit ;
un module de traitement, configuré pour déterminer des informations environnementales et des paramètres de conduite de véhicule lorsque le véhicule exécute chaque action de conduite, dans lequel les informations environnementales comprennent des informations météorologiques, des informations sur l'état des routes et des informations sur l'état de surface des routes ;
un module de formation, configuré pour, en fonction des informations d'évaluation correspondant à chaque action de conduite du véhicule, ainsi que des informations environnementales et des paramètres de conduite de véhicule, former un modèle d'algorithme d'apprentissage profond prédéfini, pour obtenir un modèle d'évaluation permettant de délivrer en sortie le confort de conduite ;
dans lequel le module de traitement est configuré pour :
déterminer un emplacement d'exécution et un moment d'exécution lorsque le véhicule exécute chaque action de conduite ;
déterminer les informations environnementales et les paramètres de conduite de véhicule en fonction de l'emplacement d'exécution et du moment d'exécution.

6. Appareil de traitement de données selon la revendication 5, dans lequel les informations d'évaluation comprennent une ou plusieurs des informations suivantes :
la sensation d'être poussé en arrière, la sensation centrifuge, la sensation de cahotement, la sensation d'avancée, la sensation de frustration et la sensation de balancement.

7. Appareil de traitement de données selon la revendication 5 ou 6, dans lequel les paramètres de conduite de véhicule comprennent une ou plusieurs des informations suivantes :
le modèle de véhicule, la vitesse de conduite, l'accélération de véhicule, le rythme de changement d'accélération, la sortie de papillon des gaz, la sortie de freinage, l'angle de braquage, l'angle d'inclinaison avant et arrière, l'angle d'oscillation gauche et droite.

8. Appareil de traitement de données pour évaluer le confort de conduite pendant une conduite autonome, comprenant :
un module de collecte de données, configuré pour obtenir une action de conduite à évaluer, et déterminer des informations environnementales et des paramètres de conduite de véhicule correspondant à l'action de conduite à évaluer ;
un module d'identification, configuré pour saisir les informations environnementales et les paramètres de conduite de véhicule correspondant à l'action de conduite à évaluer dans le modèle d'évaluation construit par le procédé selon l'une quelconque des revendications 1-3, et délivrer en sortie le confort de conduite correspondant à l'action de conduite à évaluer.

9. Appareil de traitement de données selon la revendication 8, dans lequel,
les informations d'évaluation comprennent une ou plusieurs des informations suivantes :
la sensation d'être poussé en arrière, la sensation centrifuge, la sensation de cahotement, la sensation d'avancée, la sensation de frustration et la sensation de balancement.

10. Appareil de traitement de données selon la revendication 8, dans lequel les paramètres de conduite de véhicule comprennent une ou plusieurs des informations suivantes :
le modèle de véhicule, la vitesse de conduite, l'accélération de véhicule, le rythme de changement d'accélération, la sortie de papillon des gaz, la sortie de freinage, l'angle de braquage, l'angle d'inclinaison avant et arrière, l'angle d'oscillation gauche et droite.

11. Appareil de traitement de données pour évaluer le confort de conduite pendant une conduite autonome, comprenant : une mémoire, un processeur couplé à la mémoire, et un programme informatique stocké sur la mémoire et exécutable sur le processeur, dans lequel,
le processeur effectue le procédé selon l'une quelconque des revendications 1-3 lors de l'exécution du programme informatique.

12. Appareil de traitement de données pour évaluer le confort de conduite pendant une conduite autonome, comprenant : une mémoire, un processeur couplé à la mémoire, et un programme informatique stocké sur la mémoire et exécutable sur le processeur, dans lequel,
le processeur effectue le procédé selon la revendication 4 lors de l'exécution du programme informatique.

13. Support de stockage lisible, comprenant un programme, lorsqu'il est exécuté sur un terminal, amenant le terminal à effectuer le procédé selon l'une quelconque des revendications 1-3.
